# EUROPÄISCHE PATENTSCHRIFT

(11) **EP 0 619 015 B1**
(45) Veröffentlichungstag und Bekanntmachung des Hinweises auf die Patenterteilung: **19.11.1997**
(21) Anmeldenummer: 92917546.1
(22) Anmeldetag: 27.08.1992
(51) Int. Cl.: G01M 3/32

(54) **VERFAHREN ZUR PRÜFUNG EINES BEHÄLTNISSES, PRÜFANORDNUNG, VERWENDUNG**
METHOD OF TESTING A CONTAINER, TEST DEVICE, USE
PROCEDE POUR LE CONTROLE D'UN RECIPIENT, DISPOSITIF DE CONTROLE, UTILISATION

(43) Veröffentlichungstag der Anmeldung: 12.10.1994
(60) Teilanmeldung: 97107486.9
(73) Patentinhaber: Lehmann, Martin, CH-5610 Wohlen 1 (CH)
(72) Erfinder: Lehmann, Martin, CH-5610 Wohlen 1 (CH)
(74) Vertreter: Troesch Scheidegger Werner AG
(86) Internationale Anmeldenummer: CH9200173
(87) Internationale Veröffentlichungsnummer: WO9405991

(56) Entgegenhaltungen:
- EP-A- 0 460 511
- DE-B- 1 031 030
- US-A- 4 459 843
- US-A- 4 542 643

## Beschreibung

Die vorliegende Erfindung betrifft ein Verfahren nach dem Oberbegriff von Anspruch 1, eine Prüfanordnung nach dem Oberbegriff von Anspruch 14 sowie eine Verwendung des Verfahrens bzw. der Anordnung nach Anspruch 24.

Die vorliegende Erfindung bezieht sich auf eine Prüfanordnung, wie sie aus der US-PS-5 029 464 bzw. der EP-A-0 313 678 bzw. der EP-A-0 432 143 bekannt ist.

Daraus ist es bekannt, zur Dichteprüfung von Behältnissen zwischen einem Druck im Inneren des Behältnisses und einem Druck in seiner Umgebung eine Druckfifferenz zu erstellen und aus dem Verhalten eines der Drucke darauf zu schliessen, ob das in Prüfung befindliche Behältnis vorgegebenen Dichtebedingungen oder Volumenbedingungen genügt oder nicht.

Dabei wird das zu prüfende Behältnis in eine dichtende Kammer eingelegt, welche mit einer Druckmediumsquelle oder Saugquelle verbunden ist, womit die erwähnte Druckdifferenz erstellt wird. Nach Erstellen der Druckdifferenz, als Anfangsbedingung, wird ein Druckwert der Behältnisumgebung in einer Referenzdruckkammer, einem Differenzdrucksensor vorgeschaltet, abgespeichert und mit nachfolgenden Druckwerten der Behältnisumgebung verglichen.

Nachteilig am vorbekannten Vorgehen ist, dass ein Differenzdrucksensor vorgesehen werden muss, mit höchst präzis arbeitenden Steuerventilen, zur Sicherstellung der Erfassung auch geringster Leckagen bzw. geringer Abweichungen des Behältnisvolumens von einem SOLL-Volumen.

Aus der DE-B-1 031 030 ist es bekannt, die Undichtigkeit von Bauelementen dadurch zu prüfen, dass diese erst einer Druckdifferenz ausgesetzt werden. Danach wird das Ausgangssignal eines als Sensor wirkenden Vakuummeters an einem Kondensator gespeichert. Der Eingang einer als Vergleichseinheit wirkenden Gasentladungsröhre wird nach einer Zeitspanne von etwa 1 Sekunde mit der Differenz des dann vorherrschenden Ausgangssignals des Vakuummeters und dem Signal am Kondensator beaufschlagt.

Ausgehend von einem Verfahren bzw. einer Prüfanordnung letztgenannter Art ist es Aufgabe der vorliegenden Erfindung, zu Beginn der Differenzauswertung ein definiertes Signal am Ausgang der Vergleichseinheit bereitzustellen.

Dies wird durch das Verfahren genannter Art bzw. die Prüfanordnung genannter Art erreicht, ausgeführt bzw. realisiert nach dem Kennzeichen der Ansprüche 1 bzw. 14.

Es wird kein Differenzdrucksensor mehr eingesetzt, ebenso wenig wie pneumatische Speicherkammern, sondern es wird der interessierende Druck mittels eines Relativdrucksensors erfasst, in ein elektrisches Signal gewandelt, dieses - bei der Leckageprüfung - zu vorgegebener Zeit abgespeichert und mit mindestens einem nachfolgenden, durch denselben Sensor erfassten Wert verglichen. Bei der Volumenprüfung wird ein Druckwert als Vergleichsbasis vorgegeben und abgespeichert. Dadurch entfallen auch heikle Aggregate vorbekannter Anordnung, nämlich der Differenzdrucksensor und insbesondere auch die bezüglich Steuercharakteristik anspruchsvollen Absperrventile.

Das erfindungsgemässe Verfahren ist in bevorzugten Ausführungsvarianten in den Ansprüchen 2 - 13 spezifiziert.

Bevorzugterweise wird dabei nach dem Wortlaut von Anspruch 3 bzw. demjenigen von Anspruch 6 vorgegangen, indem dort sowohl der Quellenanschluss zur Druckmediumsbeaufschlagung bzw. zum Saugen wie auch der Sensoreingang, sei dies mit dem Behältnisinneren oder mit der Behältnisumgebung, verbunden werden.

Die Erstellung der Druckdifferenz kann auf verschiedene, dem Fachmann auch aufgrund der erwähnten Schriften durchaus geläufige Weisen erfolgen. So kann beispielsweise mit vorgegebener Beaufschlagungs- oder Saugleistung während einer vorgegebenen Zeit der Differenzdruck aufgebaut werden und darnach sowohl ein erreichter Druckwert wie auch sein Verlauf ausgewertet werden. Ebenso kann die Beaufschlagung auf eine vorgegebene Druckdifferenz erfolgen und darnach der Verlauf des interessierenden Druckwertes beobachtet werden.

Die Druckbeaufschlagung kann ebenfalls, wie aus den erwähnten Schriften bekannt, durch Voraufladen einer Vorkammer bis zu einem vorgegebenen Druck und darnach Entladen der erwähnten Kammer in das Behältnis oder in seine durch eine dichtend verschliessbare Kammer gebildete Umgebung erfolgen.

Bei der Volumenprüfung kann ein vom Volumen des Behältnisses abhängiges Volumen, sei dies dessen Innenvolumen selbst oder dessen Differenzvolumen zu einer Prüfkammer, mit einer vorgegebenen Druckmediumsmenge beaufschlagt werden, oder es kann diesem Volumen eine vorgegebene Gasmenge entzogen werden. Aus dem resulnierenden Druck wird dann auf das Volumen des Behältnisses geschlossen.

Selbstverständlich werden die gemessenen Grössen mit SOLL-Grössen oder SOLL-Verläufen, wie ebenfalls aus den erwähnten Schriften bekannt, verglichen.

Bevorzugterweise wird die Abspeicherung, dem Wortlaut von Anspruch 7 folgend, so vorgenommen, dass, in einem vorgegebenen Zeitpunkt gesteuert, ein Analog/Digital-Wandler zur Wandlung des Sensorausgangssignals freigegeben wird und darnach das dann stationäre Ausgangssignal dieses Analog/Digital-Wandlers als Referenzwert für die nachfolgende Auswertung des Sensorausgangssignals eingesetzt wird. Dabei kann entweder ein weiterer Analog/Digital-Wandler dem Sensorausgang nachgeschaltet werden und dann das Ausgangssignal des letzterwähnten Wandlers mit demjenigen des Speicher-A/D-Wandlers digital verglichen werden, oder es wird, bevorzugterweise, dem Speicher-A/D-Wandler ein D/A-Wandler unmittelbar nachgeschaltet und damit das gespeicherte, rückgewandelte Signal als analoges Referenzsignal einer analogen Komparatoreinheit zugeführt, der auch direkt das Ausgangssignal des Sensors zugespiesen wird.

Im weiteren wird bevorzugterweise, und dem Wortlaut von Anspruch 9 folgend, dadurch ein Null-Abgleich vorgenommen, dass, im wesentlichen während der Wertabspeicherung an der Vergleichseinheit erfasst wird, ob ein Ausgangssignal der Anordnung den Nullwert mindestens genähert einnimmt; erscheint ein vom Nullwert oder von einem vorgegebenen Minimalwert abweichendes Signal, wird dieses als Null-Abgleichssignal eingesetzt.

Bevorzugte Ausführungsvarianten der erfindungsgemässen Anordnung sind in den Ansprüchen 15 bis 23 spezifiziert.

Die Erfindung wird anschliessend beispielsweise anhand von Figuren erläutert.

Es zeigen:
- Fig. 1: schematisch, eine erfindungsgemässe Anordnung, bei der Druckbeaufschlagungs- oder Saugquelle und Drucksensor mit der Behältnisumgebung verbunden sind;
- Fig. 2: ebenso schematisch wie Fig. 1, einen Ausschnitt der Anlage nach Fig. 1, in einer weiteren Ausführungsform;
- Fig. 3: in analoger Darstellung zu Fig. 2 den Ausschnitt in einer dritten Ausführungsvariante;
- Fig. 4: in analoger Darstellung zu Fig. 2, den Ausschnitt in einer weiteren bevorzugten Ausführungsform;
- Fig. 5: ein Funktionsblockdiagramm einer bevorzugten erfindungsgemässen Anlage zur Durchführung eines erfindungsgemässen Prüfverfahrens;
- Fig. 6: illustriert rein schematisch den Verlauf einer Messkurve.

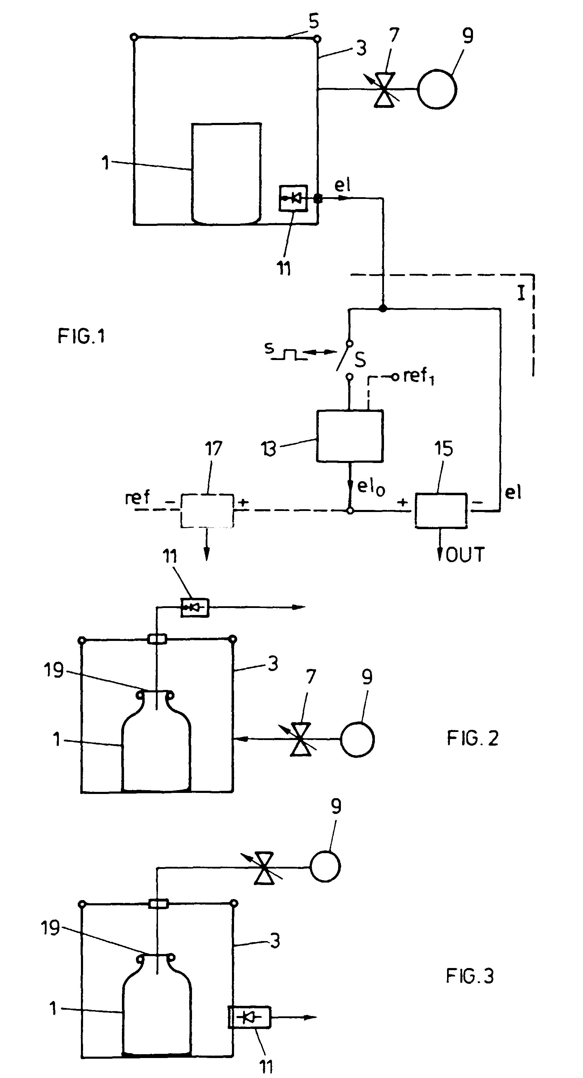

In Fig. 1 ist, wie erwähnt schematisch, ein auf Lekkage oder auf sein Volumen zu prüfendes, geschlossenes Behältnis 1 dargestellt, welches beispielsweise bereits gefüllt sein kann und innerhalb einer Prüfkammer 3 liegt. Die Kammer 3 ist beispielsweise mittels eines Einlegedeckels 5 dichtend verschliessbar. Ueber ein gesteuertes Ventil 7 wird das Prüfvolumen, hier das Differenzvolumen zwischen Volumen der Kammer 3 und Behältnis 1, mittels einer Saug- oder Druckquelle 9 druckbeaufschlagt, derart, dass über der Wandung des Behältnisses 1 ein Druckgradient entsteht. Die Quelle 9 mündet bei dieser Ausführungsform in die Kammer 3 ein.

An oder in der Kammer 3 ist weiter ein Relativdrucksensor 11 vorgesehen, welcher die eingangsseitige Druckgrösse in ein elektrisches Ausgangssignal wandelt. Das elektrische Ausgangssignal el des Sensors 11 wird über eine Abspeichsteuerschaltung, wie schematisch bei S dargestellt, auf ein von einer Zeitsteuereinheit (nicht dargestellt) abgegebenes Steuersignal s hin, in eine Speichereinheit 13 abgespeichert. Als Druckreferenzwert ist das Ausgangssignal elₒ des Speichers 13 einer Komparatoreinheit 15 zugeführt. An ihrem zweiten Eingang liegt direkt das Ausgangssignal el des Sensors 11 an. Nach Abspeicherung des Referenzwertes elₒ wird an der Komparatoreinheit 15 der Verlauf des Druckes in der Kammer 3 verfolgt.

Es sei nun vorerst die Leckageprüfung betrachtet. Ist das Behältnis 1 dicht und wird die Abspeicherung im Speicher 13 erst vorgenommen, wenn allfällige druckdifferenzbedingte Formveränderungen am Behältnis 1 abgeklungen sind, so wird darnach das Sensorausgangssignal el auf dem abgespeicherten Wert elₒ bleiben. Ausgangsseitig des Komparators 15 wird durch ein mindestens genähert Null betragendes Vergleichsresultat angezeigt, dass das Behältnis 1 dicht ist.

Bei Vorhandensein von Leckagen am Behältnis 1 wird sich nach der erwähnten Abspeicherung des ReferenzWertes elₒ der Signalwert el je nach Richtung des Druckgradienten über der Behältniswand verändern, mit desto höherer Veränderungsrate, je grösser die Leckage ist.

Vergleichen des Ausgangssignals der Komparatoreinheit 15 mit (nicht dargestellt) vorgegebenen SOLL-Werten ergibt einerseits die Information, ob eine Leckage vorhanden ist, und, anderseits, auch Information darüber, wie gross sie ist. Je nach zu prüfenden Behältnissen können kleinere Leckagen möglicherweise toleriert werden.

Ist die Leckage im Behältnis 1 gross, so wird sich über der Wandung des Behältnisses 1 gar keine Druckdifferenz aufbauen: Die Drucke zwischen Behältnisinnenraum und seiner Umgebung gleichen sich über die Leckage rasch aus. Dann würde aber ausgangsseitig des Komparators 15 ein Null-Signal erscheinen, also gleich wie im Falle eines dichten Behältnisses, und zu Prüfungsfehlern führen.

Deshalb wird, wie gestrichelt dargestellt, vorzugsweise nach der Abspeicherung des Wertes elₒ im Speicher 13, dieser abgespeicherte Wert an einer weiteren Komparatoreinheit 17 mit einem Referenzwert ref verglichen. Das Ausgangssignal der weiteren Komparatoreinheit 17 zeigt an, ob eine grosse Leckage vorhanden ist oder nicht. Sowohl wenn eine vorgegebene Druckmediumsmenge in die Kammer 3 eingelassen wird oder ihr eine vorgegebene Gasmenge entzogen wird, wird, bei grosser Leckage, der durch den Referenzwert ref angezeigte Druckwert nicht erreicht, womit das Prüfungsresultat am Behältnis 1 durch das Ausgangssignal des weiteren Komparators 17 angezeigt wird.

Für die Volumenprüfung wird der Kammer 3 eine vorgegebene Druckmediumsmenge zugespiesen bzw. Gasmenge entzogen. Der Speicher 13 wird, wie gestrichelt bei ref₁ dargestellt, hier als Referenzwertspeicher verwendet, in welchem Referenzwerte entsprechend den SOLL-Volumina zu prüfender Behältnisse vorabgespeichert werden. Durch Vergleich der erwähnten Volumenreferenzwerte ref₁ und des sich tatsächlich einstellenden Druckwertes entsprechend el in dem vom Innenvolumen des Behältnisses 1 abhängigen Differenzvolumen in der Kammer 3, d.h. aus dem Ausgangssignal der Komparatoreinheit 15, wird erkannt, ob das Behältnis 1 SOLL-Volumen aufweist oder nicht bzw. wie gross die IST-Volumen/SOLL-Volumen-Differenz ist.

Bei der Ausführungsform gemäss Fig. 2, bei der für gleiche Teile die bereits in Fig. 1 verwendeten Bezugszeichen eingesetzt sind, mündet in die Kammer 3 lediglich die Quelle 9 ein. Ueber einen dichten Verschluss 19 ist der Eingang des Sensors 11 mit dem Inneren des hier mit Oeffnung versehenen Behälters 1 verbunden. Die Auswerteelektronik, dem Sensor 11 nachgeschaltet, ist gleich wie die in Fig. 1 dargestellte.

In Fig. 3 ist analog zu Fig. 2 eine noch weitere Variante dargestellt, bei der mit Bezug auf Fig. 2 die Anordnungen von Quelle 9 und Sensor 11 vertauscht sind.

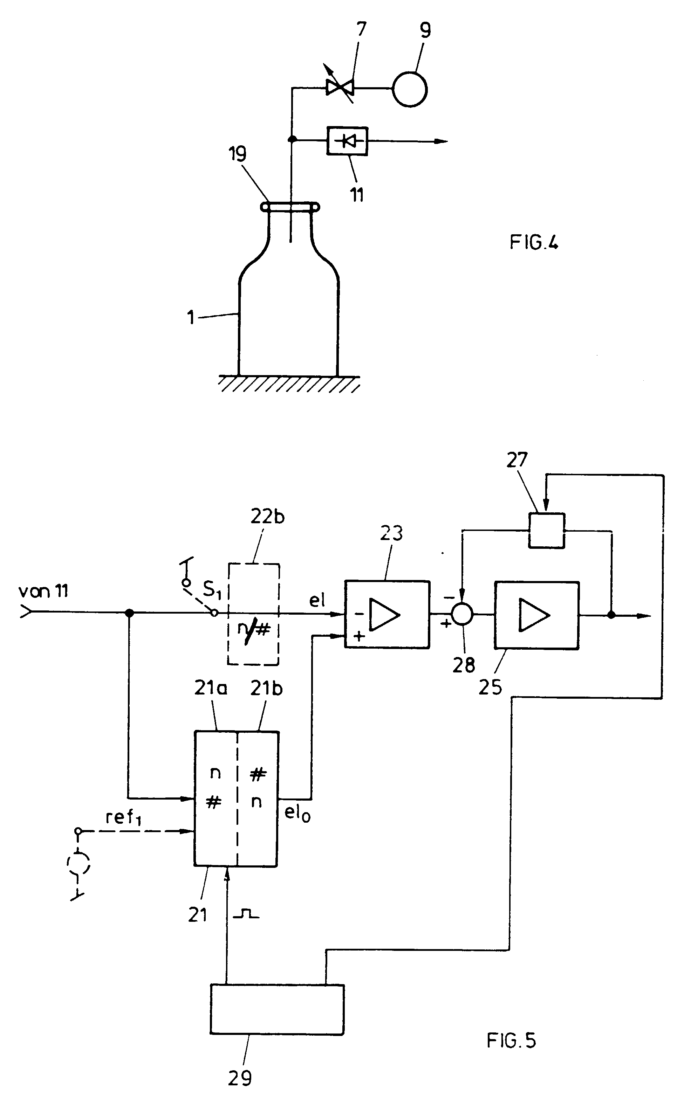

Bei der Anordnung gemäss Fig. 4 mündet einerseits die Quelle 9 über den dichtenden Anschluss 19 ins Innere eines Behältnisses 1 ein, ebenso ist der Eingang des Sensors 11 mit dem Inneren des Behältnisses 1 verbunden. Auch hier ist die anhand von Fig. 1 dargestellte Auswerteelektronik, welcher Sensor 11 zugeschaltet ist, vorgesehen. Bevorzugterweise wird die Ausführungsform nach Fig. 1 oder nach Fig. 4 eingesetzt.

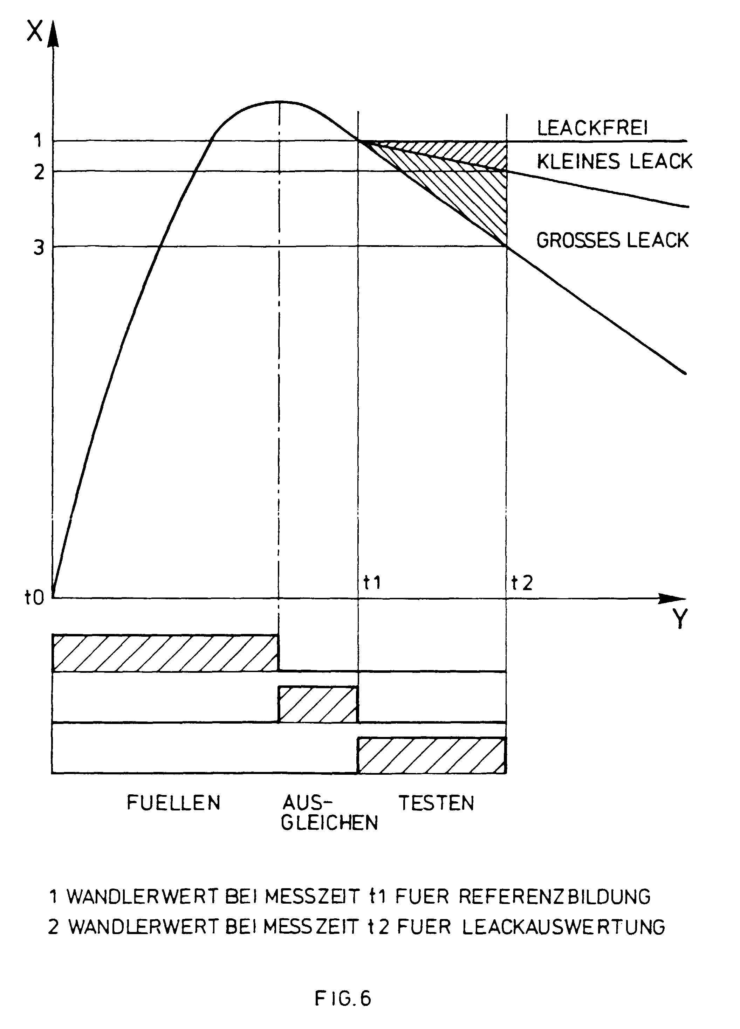

In Fig. 5 ist, in Form eines Blockschaltbildes, eine bevorzugte Realisation der in Fig. 1 gestrichelt teilumrandeten Auswerteeinheit I dargestellt. Das Ausgangssignal des Sensors 11 wird bei der bevorzugten Ausführungsvariante einer Wandlerstufe 21 zugeführt, welche eingangsseitig einen Analog/Digital-Wandler umfasst, 21a, dem unmittelbar nachgeschaltet ein Digital/Analog-Wandler 21b folgt. Der Ausgang des Digital/Analog-Wandlers 21b wird einer auf bekannte Art und Weise aufgebauten Differenzverstärkereinheit 23 zugeführt, ebenso wie das Ausgangssignal des Sensors 11. Der Ausgang der Differenzverstärkereinheit 23, entsprechend der Komparatoreinheit 15 von Fig. 1, ist einer weiteren Verstärkerstufe 25 zugeschaltet, deren Ausgang über ein Speicherelement 27 dem Eingangssignal zum Verstärker 25 überlagert ist, 28.

Die Wandlereinheit 21 wie die Speichereinheit 27 werden durch eine Zeittaktsteuerung 29 gesteuert. Diese Anordnung arbeitet wie folgt:

Zur Abspeicherung des Wertes elₒ gemäss Fig. 1 wird von der Zeitsteuereinheit 29 ein Wandlungszyklus an der Wandlereinheit 21 freigegeben, worauf der Signalwert elₒ am einen Eingang der Differenzverstärkereinheit 23 erscheint. Vorzugsweise im wesentlichen gleichzeitig steuert die Zeitsteuereinheit 29 die Speichereinheit 27 an, womit der Ausgangssignalwert des Verstärkers 25 als Null-Wert-Abgleichssignal an seinen Eingang rückgeführt wird. War das Ausgangssignal des Verstärkers 25 bei Abspeicherung des Wertes elₒ ungleich Null, so wird dieser Signalwert über die Speichereinheit 27 als Null-Kompensationssignal verwendet.

Die Erfassung grosser Lecks, wie dies anhand von Fig. 1 dargelegt wurde, kann auf verschiedene Arten erfolgen, indem beispielsweise der Ausgangssignalwert der Wandlereinheit 21 einem weiteren (nicht dargestellten) Komparator zugespiesen wird, woran er mit dem Referenzsignalwert ref gemäss Fig. 1 verglichen wird oder indem, wie gestrichelt bei S₁ dargestellt, unmittelbar vor oder nach dem Setzen der Speichereinheit 27, vorzugsweise nach deren Setzen, der ansonsten mit dem Sensor 11 verbundene Differenzverstärkereingang auf ein Bezugspotential, wie auf Masse, geschaltet wird und dann ausgangsseitig der Verstärkereinheit 25 der Wert von elₒ direkt daraufhin geprüft wird, ob er einen Referenzwert gemäss ref von Fig. 1 erreicht hat oder nicht.

Abweichend von der dargestellten bevorzugten Ausführungsform ist es ohne weiteres möglich, die zweite Wandlerstufe, nämlich den Digital/Analog-Wandler 21b, wegzulassen und dafür, wie gestrichelt bei 22b dargestellt. einen Analog/Digital-Wandler vorzusehen und dann beide Signale, d.h. elₒ und el digital weiterzuverarbeiten.

Für die Volumenprüfung werden entweder an der vorgesehenen Wandlereinheit 21 Volumenreferenzwerte, wie gestrichelt bei ref₁ dargestellt, voreingegeben, oder es wird ein weiterer Digitalspeicher direkt mit dem Digital/Analog-Wandler 21b verbunden, um eingegebene digitale Volumenreferenzwerte in entsprechende analoge Signale zu wandeln und um dann mit der dargestellten Anordnung auch die Volumenmessung vornehmen zu können.

Die dargestellte Anlage eignet sich ausserordentlich gut für die in-line-Prüfung von Behältnissen wie an einem Karussellförderer, z.B. von Flaschen, Kunststoffflaschen etc.

Grundsätzlich besteht auch die Möglichkeit, nachdem ein vorgegebener Prüfdruck erreicht ist, das elektrische Ausgangssignal des Sensors mit diesem oder mehreren voreingegebenen Werten zu vergleichen, was z.B. an einem Rechner erfolgen kann, wo der Sensorausgang eingelesen wird. Die Differenz zum eingestellten Prüfdruck, d.h. der Druckabfall wird rechnerisch ermittelt (mit im Rechner eingegebenem Grenzwert oder mit einer über Referenzleck ermittelten Grösse verglichen).

## Patentansprüche

1. Verfahren zur Prüfung eines Behältnisses (1), bei dem zwischen einem Druck im Innern des Behältnisses und einem Druck in seiner Umgebung ein Differenzdruck aufgebaut wird und aus dem Verhalten eines der Drücke darauf geschlossen wird, ob das Behältnis vorgegebenen Prüfbedingungen genügt oder nicht, und hierzu das elektrische Ausgangssignal eines Drucksensors (11) abgespeichert und danach das elektrische Ausgangssignal des Sensors mit dem abgespeicherten Signalwert an einer Vergleichseinheit (15) verglichen wird, dadurch gekennzeichnet, dass das abgespeicherte Signal und das im Moment der Abspeicherung vorherrschende Ausgangssignal des Sensors an die Eingänge der Vergleichseinheit (15) gelegt werden und damit ein Null-Referenzsignal erzeugt wird.

2. Verfahren nach Anspruch 1, dadurch gekennzeichnet, dass das elektrische Ausgangssignal des Sensors (11) mit einem oder mehreren voreingegebenen Werten verglichen wird.

3. Verfahren nach einem der Ansprüche 1 oder 2, dadurch gekennzeichnet, dass zum Aufbau der Druckdifferenz der Druck im Behältnisinnern erhöht oder erniedrigt wird und mit dem Sensor der Behältnisinnendruck gemessen wird.

4. Verfahren nach einem der Ansprüche 1 oder 2, dadurch gekennzeichnet, dass zum Aufbau der Druckdifferenz der Druck im Behältnisinnern erhöht oder erniedrigt wird und mit dem Sensor der Druck in der Behältnisumgebung gemessen wird.

5. Verfahren nach einem der Ansprüche 1 oder 2, dadurch gekennzeichnet, dass zum Aufbau der Druckdifferenz der Druck der Behältnisumgebung erhöht oder erniedrigt wird und mit dem Sensor der Behältnisinnendruck gemessen wird.

6. Verfahren nach einem der Ansprüche 1 oder 2, dadurch gekennzeichnet, dass zum Aufbau der Druckdifferenz der Druck der Behältnisumgebung erhöht oder erniedrigt wird und mit dem Sensor der Behältnisumgebungsdruck gemessen wird.

7. Verfahren nach einem der Ansprüche 1 bis 6, dadurch gekennzeichnet, dass die Abspeicherung mittels eines in einem vorgegebenen Zeitpunkt zur Wandlung freigegebenen, dem Sensor (11) nachgeschalteten Analog/Digital-Wandlers (21a) erfolgt.

8. Verfahren nach Anspruch 7, dadurch gekennzeichnet, dass dem Analog/Digital-Wandler (21a) ein Digital/Analog-Wandler (21b) nachgeschaltet wird und die Signale der Vergleichseinheit analog zugeführt werden.

9. Verfahren nach einem der Ansprüche 1 bis 8, dadurch gekennzeichnet, dass bei der Zuführung des abgespeicherten Signalwertes und des momentan vorherrschenden Ausgangssignals des Sensors an die Vergleichseinheit das Ausgangssignal der Vergleichseinheit erfasst und als Null-Abgleichssignal abgespeichert wird.

10. Verfahren nach Anspruch 9, dadurch gekennzeichnet, dass das abgespeicherte Null-Abgleichssignal durch Rückführung über mindestens eine Verstärkerstufe (25) für den nachfolgenden Signalvergleich berücksichtigt wird.

11. Verfahren nach einem der Ansprüche 1 bis 10, dadurch gekennzeichnet, dass nach Erstellen der Druckdifferenz die Abspeicherung nach einer vorgegebenen Zeitspanne vorgenommen wird.

12. Verfahren nach Anspruch 11, dadurch gekennzeichnet, dass das Ausgangssignal des Sensors in der Zeitspanne eine Maximalstelle durchläuft.

13. Verfahren nach Anspruch 12, dadurch gekennzeichnet, dass eine durchlaufene Maximalstelle durch Wiedererreichen eines Druckwertes detektiert wird, der sich bereits beim Aufbau der Druckdifferenz einstellte.

14. Prüfanordnung für Behältnisse mit einer Druck- oder Saugquelle (9), welche mit einem zu prüfenden Behältnis (1) bezüglich seines Innen- und/oder Aussendruckes in Wirkverbindung gebracht werden kann, mit mindestens einem Drucksensor (11), der ein elektrisches Ausgangssignal abgibt, und einer dem Drucksensorausgang nachgeschalteten Speichereinheit (13, 21, 17) und einer Vergleichseinheit (15), welcher das Ausgangssignal des Drucksensors und das Ausgangssignal der Speichereinheit zugeführt sind, dadurch gekennzeichnet, dass bei der Abspeicherung des Sensorausqanqssiqnals in die Speichereinheit deren Ausgangssignal und das Ausgangssignal des Sensors mit der Vergleichseinheit wirkverbunden sind.

15. Prüfanordnung nach Anspruch 14, dadurch gekennzeichnet, dass ein Behältnisanschluss (19) mit Sensordruckeingang (11) und Quellenanschluss (9) vorgesehen ist, der dichtend auf eine Behältnisöffnung (1) applizierbar ist.

16. Prüfanordnung nach Anspruch 14, dadurch gekennzeichnet, dass ein Behältnisanschluss (19) mit Sensoreingang (11) vorgesehen ist, der dichtend auf eine Behältnisöffnung (1) applizierbar ist, und eine dichtend verschliessbare Kammer (3) zur Aufnahme des Behältnisses (1), in welche die Quelle (9) einmündet.

17. Prüfanordnung nach Anspruch 14, dadurch gekennzeichnet, dass ein Behältnisanschluss (19) mit dem Quellenanschluss (9) vorgesehen ist, der dichtend auf eine Behältnisöffnung (1) applizierbar ist, und eine dichtend verschliessbare Kammer (3) zur Aufnahme des Behältnisses (1), an bzw. in welcher der Sensoreingang (11) vorgesehen ist.

18. Prüfanordnung nach Anspruch 14, dadurch gekennzeichnet, dass eine dichtend verschliessbare Kammer (3) zur Aufnahme des Behältnisses (1) vorgesehen ist, an oder in der sowohl Sensoreingang (11) wie auch Quellenanschluss (9) vorgesehen sind.

19. Prüfanordnung nach einem der Anspruche 14 bis 18, dadurch gekennzeichnet, dass die Speichereinheit einen Analog/Digital-Wandler umfasst, mit dessen Analog-Eingang der Ausgang des Sensors wirkverbunden ist.

20. Prüfanordnung nach Anspruch 19, dadurch gekennzeichnet, dass dem Analog/Digital-Wandler ein Digital/Analog-Wandler nachgeschaltet ist, dessen Ausgang mit der Vergleichseinheit wirkverbunden ist.

21. Prüfanordnung nach einem der Ansprüche 14 bis 20, dadurch gekennzeichnet, dass die Vergleichseinheit mindestens eine Verstärkerstufe aufweist, deren Ausgang mit dem Eingang einer weiteren Speichereinheit wirkverbunden ist.

22. Prüfanordnung nach Anspruch 21, dadurch gekennzeichnet, dass die Speichereinheit und die weitere Speichereinheit im wesentlichen gleichzeitig zur Abspeicherung ihres jeweiligen Eingangssignals ausgelöst sind.

23. Prüfanordnung nach Anspruch 22, dadurch gekennzeichnet, dass der Ausgang der weiteren Speichereinheit auf einen Eingang einer Verstärkerstufe an der Vergleichseinheit rückgeführt ist.

24. Verwendung des Verfahrens nach einem der Ansprüche 1 bis 13 bzw. der Anordnung nach einem der Ansprüche 14 bis 23 für die Leckageprüfung eines Behältnisses.

25. Verwendung nach Anspruch 24 für die Leckageprüfung an einem geschlossenen Behältnis.

## Claims

1. A method for testing a container (1), in which a differential pressure is built up between a pressure in the interior of the container and a pressure in the vicinity thereof, and conclusions are drawn from the behaviour of one of the pressures as to whether the container meets given testing conditions or not, and the electrical output signal of a pressure sensor (11) is stored for this purpose and then the electrical output signal of the sensor is compared with the stored signal value in a comparison unit (15), characterised in that the stored signal and the output signal of the sensor prevailing at the time of storage are applied to the inputs of the comparison unit (15) and a zero reference signal is produced therewith.

2. A method according to Claim 1, characterised in that the electrical output signal of the sensor (11) is compared with one or more pre-entered values.

3. A method according to one of Claims 1 or 2, characterised in that in order to build up the pressure difference the pressure in the interior of the container is increased or reduced and the internal container pressure is measured with the sensor.

4. A method according to one of Claims 1 or 2, characterised in that in order to build up the pressure difference the pressure in the interior of the container is increased or reduced and the pressure in the vicinity of the container is measured with the sensor.

5. A method according to one of Claims 1 or 2, characterised in that in order to build up the pressure difference the pressure in the vicinity of the container is increased or reduced and the internal container pressure is measured with the sensor.

6. A method according to one of Claims 1 or 2, characterised in that in order to build up the pressure difference the pressure in the vicinity of the container is increased or reduced and the ambient container pressure is measured with the sensor.

7. A method according to one of Claims 1 to 6, characterised in that the storage is effected by means of an analog-to-digital converter (21a) succeeding the sensor (11) and released for conversion at a given time.

8. A method according to Claim 7, characterised in that the analog-to-digital converter (21a) is succeeded by a digital-to-analog converter (21b) and the signals are supplied in analog form to the comparison unit.

9. A method according to one of Claims 1 to 8, characterised in that when supplying the stored signal value and the momentarily prevailing output signal of the sensor to the comparison unit the output signal of the comparison unit is detected and is stored as zero balance signal.

10. A method according to Claim 9, characterised in that the stored zero balance signal is taken into account for the subsequent signal comparison by returning it via at least one amplifier stage (25).

11. A method according to one of Claims 1 to 10, characterised in that after establishing the pressure difference the storage is effected after a given time period.

12. A method according to Claim 11, characterised in that the output signal of the sensor in the time period passes through a maximum point.

13. A method according to Claim 12, characterised in that a maximum point which has been passed through is detected by re-achieving a pressure value which had already occurred when building up the pressure difference.

14. A test arrangement for containers, with a pressure or suction source (9) which can be brought into active connection in terms of its internal and/or external pressure with a container (1) to be tested, having at least one pressure sensor (11) which emits an electrical output signal, and a storage unit (13, 21, 17) succeeding the pressure sensor output and a comparison unit (15) to which the output signal of the pressure sensor and the output signal of the storage unit are supplied, characterised in that when the sensor output signal is stored in the storage unit the output signal thereof and the output signal of the sensor are actively connected to the comparison unit.

15. A test arrangement according to Claim 14, characterised in that a container connection (19) with sensor pressure input (11) and source connection (9) is provided, which can be applied in sealing manner to a container opening (1).

16. A test arrangement according to Claim 14, characterised in that a container connection (19) with sensor input (11) is provided which can be applied in sealing manner to a container opening (1), and a chamber (3) which can be sealed closed for receiving the container (1), into which chamber the source (9) opens.

17. A test arrangement according to Claim 14, characterised in that a container connection (19) is provided with the source connection (9), which can be applied in sealing manner to a container opening (1), and a chamber (3) which can be sealed closed for receiving the container (1), on or in which the sensor input (11) is provided.

18. A test arrangement according to Claim 14, characterised in that a chamber (3) which can be sealed closed is provided for receiving the container (1), on or in which both the sensor input (11) and the source connection (9) are provided.

19. A test arrangement according to one of Claims 14 to 18, characterised in that the storage unit comprises an analog-to-digital converter, to the analog input of which the output of the sensor is actively connected.

20. A test arrangement according to Claim 19, characterised in that the analog-to-digital converter is succeeded by a digital-to-analog converter, the output of which is actively connected to the comparison unit.

21. A test arrangement according to one of Claims 14 to 20, characterised in that the comparison unit has at least one amplifier stage, the output of which is actively connected to the input of an additional storage unit.

22. A test arrangement according to Claim 21, characterised in that the storage unit and the additional storage unit are activated substantially simultaneously to store their respective input signals.

23. A test arrangement according to Claim 22, characterised in that the output of the additional storage unit is returned to an input of an amplifier stage at the comparison unit.

24. The use of the method according to one of Claims 1 to 13 and/or the arrangement according to one of Claims 14 to 23 for testing a container for leaks.

25. The use according to Claim 24 for testing a closed container for leaks.

## Revendications

1. Procédé pour contrôler un récipient (1), selon lequel on produit une pression différentielle entre une pression régnant à l'intérieur du récipient et une pression régnant dans son environnement, et à partir du comportement de l'une des pressions, on conclut si le récipient satisfait ou non à des conditions de contrôle prédéfinies, et à cet effet, le signal électrique de sortie d'un capteur de pression (11) est mis en mémoire puis le signal électrique de sortie du capteur est comparé au niveau d'une unité de comparaison (15) à la valeur de signal mise en mémoire, caractérisé en ce que le signal mis en mémoire et le signal de sortie du capteur qui est prédominant au moment de la mise en mémoire sont appliqués au niveau des entrées de l'unité de comparaison (15) et un signal de référence nul est ainsi généré.

2. Procédé selon la revendication 1, caractérisé en ce que le signal électrique de sortie du capteur (11) est comparé à une ou plusieurs valeurs entrées préalablement.

3. Procédé selon la revendication 1 ou 2, caractérisé en ce que pour former la différence de pression, on augmente ou on réduit la pression régnant à l'intérieur du récipient et on mesure la pression interne du récipient à l'aide du capteur.

4. Procédé selon la revendication 1 ou 2, caractérisé en ce que pour former la différence de pression, on augmente ou on réduit la pression régnant à l'intérieur du récipient et on mesure la pression qui règne dans l'environnement du récipient à l'aide du capteur.

5. Procédé selon la revendication 1 ou 2, caractérisé en ce que pour former la différence de pression, on augmente ou on réduit la pression régnant dans l'environnement du récipient et on mesure la pression interne du récipient à l'aide du capteur.

6. Procédé selon la revendication 1 ou 2, caractérisé en ce que pour former la différence de pression, on augmente ou on réduit la pression régnant dans l'environnement du récipient et on mesure la pression de l'environnement du récipient à l'aide du capteur.

7. Procédé selon l'une des revendications 1 à 6, caractérisé en ce que la mise en mémoire se fait grâce à un convertisseur analogique/numérique (21a) déclenché à un moment prédéfini et monté en aval du capteur (11).

8. Procédé selon la revendication 7, caractérisé en ce qu'un convertisseur numérique/analogique (21b) est monté en aval du convertisseur analogique/numérique (21a) et les signaux sont transmis à l'unité de comparaison par voie analogique.

9. Procédé selon l'une des revendications 1 à 8, caractérisé en ce que lors de la transmission à l'unité de comparaison de la valeur de signal mise en mémoire et du signal de sortie du capteur prédominant momentanément, le signal de sortie de l'unité de comparaison est détecté et mis en mémoire sous la forme d'un signal de compensation à zéro.

10. Procédé selon la revendication 9, caractérisé en ce que le signal de compensation à zéro mis en mémoire est pris en compte pour la comparaison de signaux suivante grâce à une rétroaction par l'intermédiaire d'au moins un niveau formant amplificateur (25).

11. Procédé selon l'une des revendications 1 à 10, caractérisé en ce que, après la formation de la différence de pression, la mise en mémoire est effectuée au bout d'un intervalle de temps prédéfini.

12. Procédé selon la revendication 11, caractérisé en ce que le signal de sortie du capteur passe par un point maximum pendant l'intervalle de temps.

13. Procédé selon la revendication 12, caractérisé en ce qu'un point maximum parcouru est détecté grâce au fait qu'on atteint à nouveau une valeur de pression qui est déjà apparue lors de la formation de la différence de pression.

14. Dispositif de contrôle pour des récipients, comprenant une source de pression ou d'aspiration (9) qui peut être mise en relation fonctionnelle avec un récipient à contrôler (1), en ce qui concerne sa pression interne et/ou sa pression externe, au moins un capteur de pression (11) qui émet un signal électrique de sortie, une unité formant mémoire (13, 21, 17) montée en aval de la sortie du capteur de pression, et une unité de comparaison (15) à laquelle sont transmis le signal de sortie du capteur de pression et le signal de sortie de l'unité formant mémoire, caractérisé en ce que lors du stockage du signal de sortie du capteur dans l'unité formant mémoire, le signal de sortie de celle-ci et le signal de sortie du capteur sont reliés suivant une relation fonctionnelle à l'unité de comparaison.

15. Dispositif de contrôle selon la revendication 14, caractérisé en ce qu'il est prévu un raccordement de récipient (19) qui est pourvu d'une entrée de pression de capteur (11) et d'un raccordement de source (9) et qui est apte à être appliqué de façon étanche sur une ouverture de récipient (1).

16. Dispositif de contrôle selon la revendication 14, caractérisé en ce qu'il est prévu un raccordement de récipient (19) qui est pourvu d'une entrée de capteur (11) et qui est apte à être appliqué de façon étanche sur une ouverture de récipient (1), et une chambre (3) qui est apte à être fermée de façon étanche, qui est destinée à recevoir le récipient (1) et dans laquelle débouche la source (9).

17. Dispositif de contrôle selon la revendication 14, caractérisé en ce qu'il est prévu un raccordement de récipient (19) qui est pourvu d'un raccordement de source (9) et qui est apte à être appliqué de façon étanche sur une ouverture de récipient (1), et une chambre (3) qui est apte à être fermée de façon étanche, qui est destinée à recevoir le récipient (1) et sur ou dans laquelle est prévue l'entrée de capteur (11).

18. Dispositif de contrôle selon la revendication 14, caractérisé en ce qu'il est prévu une chambre (3) qui est apte à être fermée de façon étanche, qui est destinée à recevoir le récipient (1) et sur ou dans laquelle sont prévus l'entrée de capteur (11) et le raccordement de source (9).

19. Dispositif selon l'une des revendications 14 à 18, caractérisé en ce que l'unité formant mémoire comprend un convertisseur analogique/numérique à l'entrée analogique duquel la sortie du capteur est reliée suivant une relation fonctionnelle.

20. Dispositif selon la revendication 19, caractérisé en ce qu'il est prévu, en aval du convertisseur analogique/numérique, un convertisseur numérique/analogique dont la sortie est reliée suivant une relation fonctionnelle à l'unité de comparaison.

21. Dispositif selon l'une des revendications 14 à 20, caractérisé en ce que l'unité de comparaison comporte au moins un niveau formant amplificateur dont la sortie est reliée suivant une relation fonctionnelle à l'entrée d'une unité formant mémoire supplémentaire.

22. Dispositif selon la revendication 21, caractérisé en ce que l'unité formant mémoire et l'unité formant mémoire supplémentaire sont déclenchées globalement simultanément pour la mise en mémoire de leurs signaux d'entrée respectifs.

23. Dispositif de contrôle selon la revendication 22, caractérisé en ce que la sortie de l'unité formant mémoire supplémentaire est reliée par rétroaction à une entrée d'un niveau formant amplificateur d'une unité de comparaison.

24. Utilisation du procédé selon l'une des revendications 1 à 13 ou du dispositif selon l'une des revendications 14 à 23 pour le contrôle d'étanchéité d'un récipient.

25. Utilisation selon la revendication 24 pour le contrôle d'étanchéité sur un récipient fermé.
